# EUROPEAN PATENT SPECIFICATION

(11) **EP 0 963 781 B1**
(45) Date of publication and mention of the grant of the patent: **27.08.2003**
(21) Application number: 99110057.9
(22) Date of filing: 21.05.1999
(51) Int. Cl.: B01D 53/94, B01J 37/03, B01J 23/63, B01J 23/89

(54) **Catalyst for purifying exhaust gas and process for producing the same**
Abgasreinigungskatalysator und Verfahren zu dessen Herstellung
Catalyseur pour purifier un gaz d'échappement et procédé pour sa préparation

(30) Priority: 03.06.1998 JP 15467798
(43) Date of publication of application: 15.12.1999
(73) Proprietor: TOYOTA JIDOSHA KABUSHIKI KAISHA, Aichi-ken 471-8571 (JP)
(72) Inventor: Takada, Toshihiro, c/o Toyota Jidosha K.K., Toyota-shi, Aichi.ken 471-8571 (JP)
(74) Representative: Winter, Brandl, Fürniss, Hübner, Röss, Kaiser, Polte Partnerschaft

(56) References cited:
- EP-A- 0 614 854
- EP-A- 0 684 073
- EP-A- 0 749 774
- EP-A- 0 771 584
- US-A- 4 927 799

## Description

### Field of the Invention

The present invention relates to a catalyst which can efficiently purify harmful components, such as carbon monoxide (CO), hydrocarbons (HC) and nitrogen oxides (NOₓ). A catalyst for purifying an exhaust gas according to the present invention is good in terms of the activity of purifying an exhaust gas. The present catalyst exhibits least decreased purifying performance even after it is subjected to a high-temperature durability test, and accordingly is good in terms of the durability.

### Description of the Related Art

Since ceria stores and releases oxygen, it is known as an oxygen storage-and-release material (hereinafter referred to as "OSM"). It is used widely as a co-catalyst accompanied by a catalyst for purifying an exhaust gas emitted from an internal combustion engine.

For example, a 3-way catalyst oxidizes the CO and HC contained in an exhaust gas to purify them, and reduces the NOₓ to purify it. It is used in a state where the air/fuel (A/F) ratio is substantially controlled at the ideal air-fuel ratio. However, in a transition state, there arises a case where the actual air-fuel ratio deviates from the ideal air-fuel ratio. When a catalyst containing ceria is used in such a case, the actual air-fuel ratio can be controlled approximately to the ideal air-fuel ratio by the oxygen storage-and-release action of the ceria. The width of the air-fuel ratio (i.e., window) can be widened so that the catalyst exhibits improved purifying performance. Moreover, since the partial pressure of the oxygen can be adjusted to a constant value substantially, the ceria produces an advantage in that a noble metal, one of the catalyst components, is inhibited from sintering. Since it is preferred to enlarge the specific surface area in order to enhance the oxygen storage-and-release ability of the ceria, the ceria is used in a form of a powder.

However, a catalyst for purifying an exhaust gas is used at elevated temperatures. Even after it is exposed to elevated temperatures, it is necessary for the catalyst to exhibit a high purifying activity. Therefore, even if the ceria is used in a form of powder so as to exhibit a high specific surface area, the ceria should exhibit the specific surface area which is decreased less when it is used at elevated temperatures. Namely, the ceria is required to be good in terms of the durability.

Hence, there has been a proposal where zirconia, an oxide of rare earth elements, excepting cerium, and the ceria are solved to use the resulting solid solution as an OSM.

For instance, Japanese Unexamined Patent Publication (KOKAI) No. 3-131,343 and Japanese Unexamined Patent Publication (KOKAI) No. 4-55,315 disclose a catalyst for purifying an exhaust gas. In the catalyst, a composite oxide of ceria and zirconia is formed out of an aqueous solution by utilizing the precipitation formation reaction, and a slurry containing the resulting composite oxide is coated on a monolithic support. Since the zirconia is solved in the ceria, the catalyst exhibits a better oxygen storage-and-release ability than the case where the zirconia is used independently or the case where the ceria and zirconia are mixed in a form of their powders. Moreover, the catalyst is good in terms of the durability because of the stabilizing action of the zirconia.

Alumina is generally used as a support of the 3-way catalyst, and alumina loaded with platinum (Pt) is used widely. Moreover, in order to give an oxygen storage-and-release ability to alumina with Pt loaded, Japanese Unexamined Patent Publication (KOKAI) No. 9-155,192, for example, discloses a catalyst. This catalyst includes a support, which is made by mixing an alumina powder and a ceria-zirconia composite oxide powder, and a noble metal loaded on the support.

When the catalyst disclosed in Japanese Unexamined Patent Publication (KOKAI) No. 9-155,192 is subjected to a high-temperature durability test, the catalyst exhibits decreased purifying performance to a relatively large extent. The catalyst cannot be sufficient in terms of the durability.

The reasons why the disadvantage occurs are as follows: since the sulfur oxides contained in the exhaust gas adsorb onto the OSM, the oxygen storage-and-release ability of the OSM decreases (i.e., sulfur poisoning); since the specific surface area of the alumina support decreases, the noble metal and the OSM grow granularly; since the solid-solution reaction occurs between the alumina support and the OSM, the oxygen storage-and-release ability of the OSM decreases; since the HC adsorbs onto the OSM, the oxygen storage-and-release ability of the OSM decreases (i.e., HC poisoning); and since the OSM itself degrades, the noble metal grows granularly.

EP-A-0.771.584 discloses a catalyst comprising a composite oxide including TiO₂.

EP-A-0.684.073 discloses a catalyst comprising a composite oxide including Fe₂O₃.

### SUMMARY OF THE INVENTION

The present invention has been developed in view of these circumstances. It is therefore an object of the present invention to provide a catalyst having an OSM whose purifying performance is further improved after being subjected to a high-temperature durability test.

A first aspect of the present invention can carry out the object. In the first aspect, a catalyst for purifying an exhaust gas comprises a support composed of a porous oxide; a Fe-Ti composite oxide; and a noble metal: wherein
the support and the OSM are composited at an approximately atomic level to constitute a composite oxide support; and the noble metal is loaded on the oxide composite support.

A second aspect of the present invention is an optimum process for producing the catalyst according to the first aspect of the invention. In the second aspect, the process comprises the steps of:
preparing a solution by dissolving an alkoxide of at least one metal selected from the group consisting of Al, Ti, Si and Zr, and metallic salts or alkoxides of Fe and Ti into an alcohol;
adding water to the solution to hydrolyze the alkoxide, and simultaneously therewith or thereafter alkalifying the solution to form a precipitate;
burning the precipitate to make an oxide composite support, and thereafter loading a noble metal on the oxide composite support.

In accordance with the first aspect of the present invention, the catalyst has the Fe-Ti composite oxide, and consequently the support exhibits a specific surface area which decreases less after a durability test. In addition, the Fe-Ti composite oxide and the noble metal are inhibited from growing granularly. Hence, the catalyst maintains the high purifying performance even after the durability test.

In accordance with the second aspect of the present invention, the catalyst exhibiting the aforementioned good characteristics can be produced with ease and stably and securely.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a diagram for illustrating how the granular growth effects actions in the present catalyst and the conventional catalyst;
Fig. 2 is a graph for illustrating the NOₓ conversions which were exhibited by the examples of the present invention and the comparative examples, and the particle diameters of Pt which were exhibited by the same after a durability test;
Fig. 3 is a graph for illustrating the specific surface areas exhibited by the oxide composite supports employed by the examples of the present invention, and the specific surface areas exhibited by the oxide mixture support employed by the comparative examples;
Fig. 4 is a graph for illustrating the particle diameters of Pt which were exhibited by the examples of the present invention and the comparative examples after a durability test;
Fig. 5 is a graph for illustrating the NOₓ conversions which were exhibited by the examples of the present invention; and
Fig. 6 is a graph for illustrating the NOₓ conversions which were exhibited by the examples of the present invention.

### DETAILED DESCRIPTION OF THE PREFERRED EMBODIMENTS

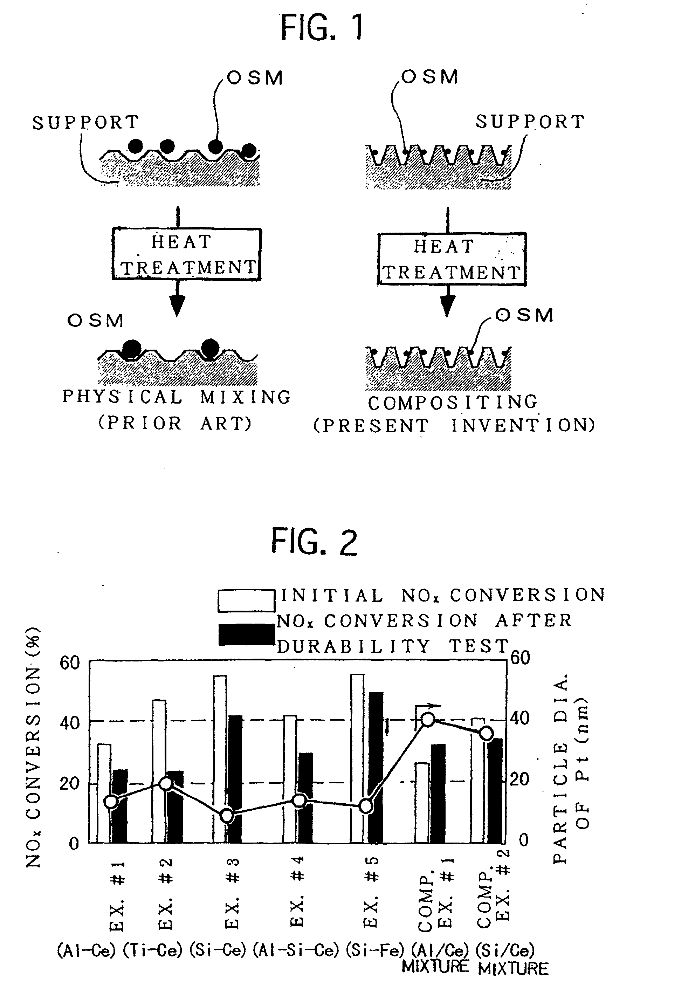

In the conventional catalyst in which the support composed of a porous oxide and the OSM are mixed physically, the relatively large support particles coexist with the OSM particles as illustrated in Fig. 1. Accordingly, when the conventional catalyst is subjected to a high temperature, the OSM particles move and agglomerate to granularly grow.

However, in the present catalyst, since the support and the OSM are composited at an approximately atomic level, the respective fine OSM particles are trapped in the fine compartments of the support. Accordingly, when the present catalyst is subjected to a high temperature, the movements of the OSM particles are suppressed. Thus, it is believed that the OSM particles are inhibited from growing granularly.

Moreover, in the present catalyst, the noble metal and the OSM are in proximity to each other. Accordingly, the HC, which tries to adsorb onto the OSM, is removed by being oxidized by the noble metal. Thus, the HC poisoning is suppressed. Due to these reasons, the present catalyst for purifying an exhaust gas can exhibit a high purifying activity even after it is subjected to a high-temperature durability test.

As for the support composed of a porous oxide, alumina (Al₂O₃), silica (SiO₂), titania (TiO₂), zirconia (ZrO₂), magnesia (MgO), silica-alumina, and zeolite can be exemplified. One of these oxides, or a plurality of these oxides can be mixed and used. Alternatively, a composite oxide, which is composed of a plurality of these oxides can be used. Among these oxides, SiO₂ is especially preferred, because SiO₂ is less likely to generate a solid solution when combined with the OSM. However, when SiO₂ is used independently, it is vitrified to degrade at elevated temperatures. Accordingly, in order to improve the heat resistance of SiO₂, SiO₂ can be mixed and used with Al₂O₃.

Zeolite can be used as a support or an HC adsorbing material. Zeolite can be mordenite, USY, ZSM-5, ferrierite, and zeolite β. Among them, it is preferable to use zeolite whose SiO₂-to-Al₂O₃ molar ratio falls in the range of from 10 to 500. When zeolite containing SiO₂ in such a large amount is used, the Al elimination reaction is suppressed at elevated temperatures. Thus, the resulting support is further improved in terms of the durability. When H-type zeolite or NH₃-type zeolite is used, it is preferable to ion-exchange at least a part of it with alkali metal ions, alkaline-earth metal ions and transition metal ions, and to mix and use the resulting ion-exchanged H-type zeolite or NH₃-type zeolite with the original one.

When zeolite is used as an HC adsorbing material, and when it coexists with a support, excepting the zeolite, and the OSM, the zeolite can preferably be used in an amount of from 30 to 90% by weight with respect to the total amount of the support, the OSM and the zeolite. When the zeolite is used in an amount of less than 30% by weight, it adsorbs HC in a reduced amount so that the NOₓ conversion decreases in an oxygen-rich atmosphere. When the zeolite is used in an amount of more than 90% by weight, the amounts of the support and the OSM are decreased so that the purifying performance might possibly be diminished.

As for the OSM a Fe-Ti composite oxide is used. For the Fe-Ti composite oxide, it is preferable to use one whose number of Fe moles falls in the range of from 50 to 98 molar % with respect to the total number of Fe moles and Ti moles. If such is the case, the sulfur-poisoning resistance is improved, and not only the heat resistance but also the oxygen storage-and-release capacity are upgraded.

In the present exhaust-gas-purifying catalyst, the support and the OSM are composited at an approximately atomic level. The concept of the compositing herein can mean the state where the OSM is highly dispersed and loaded on the support in an extremely fine mode in which the OSM is close to the constituent atoms in size; or the state where the support and the OSM are solved to form a crystalline or amorphous composite oxide. Namely, since the fine OSM are incorporated into the matrix of the support in a highly dispersed state, each of the OSM particles are fractionated into the small compartments of the matrix. Thus, the respective OSM particles are inhibited from contacting with each other and growing granularly. Moreover, due to the presence of the OSM, the specific surface area of the support is inhibited from decreasing.

Concerning the composition ratio of the support and the OSM, the amount of the OSM can preferably be occupy in the range of from 10 to 50% by weight with respect to the total amount of the support and the OSM. When the OSM is used in an amount of less than 10% by weight, the oxygen storage-and-release ability is insufficient so that the purifying performance of the resulting catalyst degrades. When the OSM is used in an amount of more than 50% by weight, the support component is reduced so that the purifying performance of the resulting catalyst degrades.

As for the noble metal, known noble metals, such as platinum (Pt), palladium (Pd), rhodium (Rh), iridium (Ir), silver (Ag) and indium (In), can be used. The loading amount can preferably fall in the range of from 0.4 to 2.4% by weight with respect to the weight of the whole present catalyst. When the loading amount is less than 0.4% by weight, the resulting catalyst exhibits excessively low purifying performance. When the loading amount is more than 2.4% by weight, the resulting catalyst exhibits saturated purifying performance, and the production cost goes up sharply.

The present exhaust-gas-purifying catalyst can be manufactured in the following manner: a dispersion is mixed with an aqueous solution. In the dispersion, an oxide powder of metal is dispersed in water. The metal constitutes the support, and is at least one member selected from the group consisting of Al, Ti, Si and Zr, for example. The aqueous solution contains a water-soluble salt of metal whose oxide has an ability of storing and releasing oxygen. The metal is Fe+Ti. Then, the mixture is alkalified to precipitate the metal, constituting the OSM, on the oxide powder as the hydroxide. The oxide powder with the hydroxide precipitated thereon is filtered and washed with water, and is burned thereafter. Thus, the oxide composite support can be produced. Finally, the oxide composite support is subjected to the impregnation loading method or the adsorption loading method to load the noble metal thereon.

However, the particle diameter of the thus formed oxide composite support is regulated by the particle diameter of the metallic oxide powder which is supplied as the support source. Accordingly, there arises the limitation on highly dispersing the metal which constitutes the OSM.

Hence, in the present production process set forth in the second aspect of the present invention, a solution is prepared. In the solution, an alkoxide of metal which is selected from the group consisting of Al, Ti, Si and Zr, and metallic salts or alkoxides of Fe and Ti are dissolved into an alcohol. Then, water and alkaline substances can be added to the solution to form a precipitate.

The metallic component constituting the support is supplied as an alkoxide, and is hydrolyzed. Thus, the metallic component is precipitated as a hydroxide. The metal constituting the OSM is supplied as a salt. Then, the system is alkalified to precipitate the metal as a hydroxide. Alternatively, the metal constituting the OSM is supplied as an alkoxide, and is hydrolyzed to precipitate it as a hydroxide. With these arrangements, the metal constituting the OSM is dispersed further highly, and the granular growth is further suppressed.

Note that commercially available SiO₂ contains alkali metals which result from the alkalifying treatment in the production process. Therefore, when it is used as the support, the resulting support exhibits a decreased melting point. As result, the SiO₂ itself undergoes the sintering, and consequently the noble metal grows granularly. However, when SiO₂ is made from the alkoxide by the above-described production process, the resulting SiO₂ is free from alkali metals completely. Thus, the problems can be avoided. Consequently, the noble metal is further inhibited from growing granularly.

The alkoxide of metal which is selected from the group consisting of Al, Ti, Si and Zr, and the metallic salt or the alkoxide of Fe and Ti used herein are soluble in alcohol.

Accordingly, the metallic salt or the alkoxide of Fe and Ti can be a nitrate or an alkoxide. For Fe-Ti composite oxide, a salt of Fe and Ti or an alkoxide thereof can be mixed and used.

When the OSM is made from the metallic salt, the step of hydrolyzing the alkoxide of at least one metal selected from the group consisting of Al, Ti, Si and Zr to precipitate it as the hydroxide, and the step of precipitating the salt of the metal, constituting the OSM, as the hydroxide can be carried out in the following manner. For example, after hydrolyzing the alkoxide of at least one metal selected from the group consisting of Al, Ti, Si and Zr, the system is alkalified to precipitate the hydroxide out of the salt of the metal constituting the OSM.

However, when the alkoxide is hydrolyzed by adding only water, the hydrolysis develops gradually to make the resulting hydroxide bulky. Consequently, it is preferred to add alkalified water instead of pure water. With this arrangement, the hydrolysis of the alkoxide develops rapidly to generate the hydroxide in a fine form. In addition, since the hydrolysis of the alkoxide and the hydroxidation of the salt develop simultaneously, the metal, constituting the OSM, can be dispersed furthermore highly.

When loading the OSM out of the metallic alkoxides, the respective alkoxides can be mixed in advance, and can thereafter be hydrolyzed to precipitate them as the hydroxides. However, since the resulting hydroxides are bulky, it is preferred to add alkalified water instead of pure water. With this arrangement, the hydrolysis of the alkoxides develops rapidly to generate the hydroxides in a fine form. Accordingly, the metal, constituting the OSM, can be dispersed furthermore highly.

As for the alkalified water, an aqueous solution of a variety of alkaline substances can be used. The pH can preferably fall in the range of from 8 to 9. However, when an aqueous solution of an alkali metal is used, the alkali metal might reside in the composite oxide support even after burning, and the residing alkali metal might adversely affect the purifying performance of the resulting catalyst. Therefore, it is preferred to use an aqueous solution of an alkaline substance, for example, ammonium or the the like, which burns out during burning.

Note that, instead of adding ammonium after adding water to the solution, it is preferred to add ammonium as aqueous ammonium thereto. By adding aqueous ammonium to the solution, the hydrolysis reaction occurs rapidly to precipitate finer hydroxide particles. Thus, the oxide composite support can be prepared in which the metal, constituting the OSM, is dispersed furthermore highly.

The present invention will be hereinafter described in detail with reference to examples and comparative examples.

### Example No. 1 (not according to the invention)

Al₂(OC₃H₇)₃, Ce(NO₃)₃ • 6H₂O and ZrO(NO₃)₂ • 2H₂O were prepared in predetermined amounts, and were mixed with 2-propanol. The mixture was held at 80 °C, and was stirred well to dissolve the components. While holding and stirring the mixture at 80 °C, a predetermined amount of water was dropped. The mixture was still held at 80 °C, and was further stirred for 60 minutes. At this moment, the alkoxide is hydrolyzed, and the Ce and Zr were dispersed in the gel of Al in the solution. Thereafter, while holding and stirring the resulting dispersion at 80 °C, 28% aqueous ammonium was dropped in a predetermined amount. Thus, the hydroxide of Ce and the hydroxide of Zr were precipitated, and were dispersed uniformly in the gel of Al.

The thus prepared gel was filtered and washed. The resulting cake was dried at 120 °C for 24 hours, and burned at 500 °C for 3 hours. Thus, an oxide composite support was prepared which included metals in a molar composition ratio of AI : Ce : Zr = 8 : 1 : 1. Note that this production process of the oxide composite support will be hereinafter referred to as "Production Process "A"".

With respect to 100 parts by weight of the oxide composite support, 100 parts by weight of a hexaammine platinum aqueous solution and 200 parts by weight of pure water were mixed. The concentration of the hexaammine platinum aqueous solution was 2% by weight. The resulting mixture was stirred for 1 hour. Thereafter, the mixture was heated at 100 °C to evaporate the water content. The residue was dried at 120 °C for 2 hours, and was thereafter burned at 300 °C for 2 hours. Thus, a Pt/composite support powder was prepared on which Pt was loaded on the oxide composite support in an amount of 2.0% by weight.

Then, 50 parts by weight of the Pt/composite support powder, 50 parts by weight of mordenite 30, 200 parts by weight of pure water and 50 parts by weight of silica sol were mixed. The mordenite 30 was "HSZ6600HOA" made by TOSO Co., Ltd. The solid content of the silica sol was 35%. The resulting mixture was stirred to prepare a slurry. Whilst, a honeycomb catalyst support substrate made from cordierite was prepared, and had a volume of 1.5 L. The support substrate was immersed into the resulting slurry, and was blown to blow off the slurry in excess. The support substrate was dried at 100 °C for 2 hours, and burned at 500 °C for 2 hours to prepare a coating layer. A catalyst of Example No. was thus completed. Note that the coating layer was coated on the support substrate in an amount of 150 g with respect to 1 L of the support substrate, and that the Pt was loaded on the support substrate in an amount of 1.0 g with respect to 1 L of the support substrate.

### Example No. 2 (not according to the invention)

Except that Ti(OC₄H₉)₄ was used instead of Al₂(OC₃H₇)₃, an oxide composite support, which included metals in a molar composition ratio of Ti : Ce : Zr = 8 : 1 : 1, was prepared in the same manner as Example No. 1. Then, this oxide composite support was used to complete a catalyst of Example No. 2. Namely, Pt was loaded on and mordenite was mixed with the oxide composite support in the same manner as Example No. 1.

### Example No. 3 (not according to the invention)

Except that Si(OC₂H₅)₄ was used instead of Al₂(OC₃H₇)₃, an oxide composite support, which included metals in a molar composition ratio of Si : Ce : Zr = 8 : 1 : 1, was prepared in the same manner as Example No. 1. Then, this oxide composite support was used to complete a catalyst of Example No. 3. Namely, Pt was loaded on and mordenite was mixed with the oxide composite support in the same manner as Example No. 1.

### Example No. 4 (not according to the invention)

Except that both of Si(OC₂H₅)₄ and Al₂(OC₃H₇)₃ was used instead of Al₂(OC₃H₇)₃ only, an oxide composite support, which included metals in a molar composition ratio of Si : Al : Ce : Zr = 4 : 4 : 1 : 1, was prepared in the same manner as Example No. 1. Then, this oxide composite support was used to complete a catalyst of Example No. 4. Namely, the Pt was loaded on and the mordenite was mixed with the oxide composite support in the same manner as Example No. 1.

### Example No. 5

Except that Si(OC₂H₅)₄ was used instead of Al₂(OC₃H₇)₃, and Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 8 : 1 : 1, was prepared in the same manner as Example No. 1. Then, this oxide composite support was used to complete a catalyst of Example No. 5. Namely, Pt was loaded on and mordenite was mixed with the oxide composite support in the same manner as Example No. 1.

### Comparative Example No. 1

A γ-alumina powder and a ceria-zirconia solid solution powder were mixed so as to establish a molar composition ratio of Al : Ce : Zr = 8 : 1 : 1, thereby preparing an oxide mixture support. Note that the ceria-zirconia solid solution powder included Ce and Zr in a molar ratio of Ce : Zr = 1 : 1. Instead of the oxide composite support, this oxide mixture support was used to complete a catalyst of Comparative Example No. 1. Namely, Pt was loaded on and mordenite was mixed with the oxide mixture support in the same manner as Example No. 1.

### Comparative Example No. 2

An SiO₂ powder and a ceria-zirconia solid solution powder were mixed so as to establish a molar composition ratio of Si : Ce : Zr = 8 : 1 : 1, thereby preparing an oxide mixture support. Note that the ceria-zirconia solid solution powder included Ce and Zr in a molar ratio of Ce : Zr = 1 : 1. Instead of the oxide composite support, this oxide mixture support was used to complete a catalyst of Comparative Example No. 2. Namely, Pt was loaded on and mordenite was mixed with the oxide mixture support in the same manner as Example No. 1.

### (Evaluation No. 1)

The seven catalysts were installed to a testing apparatus, respectively. Then, a model gas whose composition is set forth in Table 1 below was flowed through the respective catalysts to measure the maximum NO conversions. Note that the model gas had a temperature of from 200 to 400 °C at the inlet of the testing apparatus and was flowed at a space velocity of 200,000 hr⁻¹. The maximum NO conversions are illustrated in Fig. 2 as the initial NOₓ conversions.

Next, the seven catalysts were installed to the testing apparatus again, respectively. Then, the respective catalysts were subjected to a durability test. For example, in the durability, the model gas whose composition is set forth in Table 1 below was flowed through the respective catalysts for 3 hours. Note that the model gas had a temperature of 850 °C at the inlet of the testing apparatus. Moreover, the respective catalysts, which had been subjected to the durability test, were examined for the NO conversions in the same manner as the measurements of the initial NOₓ conversion. The results of the measurements are illustrated in Fig. 2 as the NOₓ conversions after the durability test. After the durability test, the respective catalysts were examined for the particle diameter of the Pt by using an electron microscope. The results of the measurements are also illustrated in Fig. 2.

**TABLE 1**

| | O₂ (%) | CO₂ (%) | CO (ppm) | C₃H₆ (ppm) | NO (%) | H₂O (%) | SO₂ (ppm) | N₂ |
|---|---|---|---|---|---|---|---|---|
| Model Gas | 10 | 6.7 | 150 | 2000 | 300 | 10 | 300 | Balance |

It is apparent from Fig. 2 that the catalyst of Example Nos. 3 and 5 exhibited extremely higher NOₓ conversions than the catalysts of Comparative Example Nos. 1 and 2 after the durability test, and were good in terms of the durability. Moreover, it is evident from Fig. 2 that the granular growth of the Pt was suppressed more in the catalysts of Example Nos. 1 through 5 than in the catalysts of Comparative Example Nos. 1 and 2 during the durability test. It is believed that this advantage is effected by the arrangement that the oxide of at least one metal selected from the group consisting of Al, Ti and Si and the OSM are composited at a level close to their atomic levels.

In addition, since the catalyst of Example No. 5 was remarkably good in terms of the durability, it is understood that SiO₂ can preferably be selected as the porous oxide, and that Fe₂O₃-TiO₂ should be selected as the OSM.

Note that the catalyst of Example No. 1 exhibited the NOₓ conversion, which was slightly lower than that of Comparative Example No. 1, after the durability test. It is believed that this phenomenon occurred due to the following reasons: the alumina and the ceria-zirconia solid solution solved to decrease the oxygen storage-and-release ability of the OSM; and the alumina and the ceria-zirconia solid solution were likely to adsorb the sulfates, and consequently the adsorbed sulfates facilitated the elimination reaction of Al from the zeolite. Hence, when alumina is used, it is preferred to coexist silica with alumina as in the catalyst of Example No. 4.

### Example No. 6 (not according to the invention)

Except that Si(OC₂H₅)₄ was used instead of Al₂(OC₃H₇)₃, an oxide composite support, which included metals in a molar composition ratio of Si : Ce : Zr = 4 : 1 : 1, was prepared in the same manner as Example No. 1. Then, this oxide composite support was used to complete a catalyst of Example No. 6. Namely, Pt was loaded on and mordenite was mixed with the oxide composite support in the same manner as Example No. 1.

### Example No. 7 (not according to the invention)

An aqueous solution was prepared by dissolving Ce(NO₃)₃ • 6H₂O and ZrO(NO₃)₂ • 2H₂O in a predetermined amount of water. A predetermined amount of SiO₂ was mixed with the aqueous solution, and the mixture was stirred well. While stirring the mixture solution, 28% aqueous ammonium was dropped in a predetermined amount. Thus, the hydroxides of Ce and Zr were precipitated on the SiO₂ powder.

The SiO₂ powder was filtered and washed. The resulting cake was dried at 120 °C for 24 hours, and burned at 500 °C for 3 hours. Thus, an oxide composite support was prepared which included metals in a molar composition ratio of Si : Ce : Zr = 8 : 1: 1. Note that this production process of the oxide composite support will be hereinafter referred to as "Production Process "B"".

Then, this oxide composite support was used to complete a catalyst of Example No. 7. Namely, Pt was loaded on and mordenite was mixed with the oxide composite support in the same manner as Example No. 1.

### Example No. 8 (not according to the invention)

Except that the molar composition ratio was changed to Si: Ce : Zr = 4 : 1 : 1, an oxide composite support was prepared in the same manner as Example No. 7. Then, this oxide composite support was used to complete a catalyst of Example No. 8. Namely, Pt was loaded on and mordenite was mixed with the oxide composite support in the same manner as Example No. 1.

### Example No. 9 (not according to the invention)

An oxide composite support, which included metals in a molar composition ratio of Si : Ce : Zr = 8 : 1 : 1, was prepared in the same manner as Example No. 7. Then, this oxide composite support was further burned at 900 °C for 3 hours. Thereafter, the resulting oxide composite support was used to complete a catalyst of Example No. 9. Namely, Pt was loaded on and mordenite was mixed with the oxide composite support in the same manner as Example No. 1.

### Example No. 10 (not according to the invention)

Except that the molar composition ratio was changed to Si : Ce : Zr = 4 : 1 : 1, an oxide composite support was prepared in the same manner as Example No. 7. Then, this oxide composite support was further burned at 900 °C for 3 hours. Thereafter, the resulting oxide composite support was used to complete a catalyst of Example No. 10. Namely, Pt was loaded on and mordenite was mixed with the oxide composite support in the same manner as Example No. 1.

### Comparative Example No. 3

An SiO₂ powder and a ceria-zirconia solid solution powder were mixed so as to establish a molar composition ratio of Si : Ce : Zr = 4 : 1 : 1, thereby preparing an oxide mixture support. Note that the ceria-zirconia solid solution powder included Ce and Zr in a molar ratio of Ce : Zr = 1 : 1. Instead of the oxide composite support, this oxide mixture support was used to complete a catalyst of Comparative Example No. 3. Namely, Pt was loaded on and mordenite was mixed with the oxide mixture support in the same manner as Example No. 1.

### Comparative Example No. 4

A TiO₂ powder and a ceria-zirconia solid solution powder were mixed so as to establish a molar composition ratio of Ti : Ce : Zr = 8 : 1 : 1, thereby preparing an oxide mixture support. Note that the ceria-zirconia solid solution powder included Ce and Zr in a molar ratio of Ce : Zr = 1 : 1. Instead of the oxide composite support, this oxide mixture support was used to complete a catalyst of Comparative Example No. 4. Namely, Pt was loaded on and mordenite was mixed with the oxide mixture support in the same manner as Example No. 1.

### Comparative Example No. 5

An SiO₂ powder and a ceria-zirconia solid solution powder were mixed so as to establish a molar composition ratio of Si : Ce : Zr = 10 : 3 : 7, thereby preparing an oxide mixture support. Note that the ceria-zirconia solid solution powder included Ce and Zr in a molar ratio of Ce : Zr = 3 : 7. Instead of the oxide composite support, this oxide mixture support was used to complete a catalyst of Comparative Example No. 5. Namely, Pt was loaded on and mordenite was mixed with the oxide mixture support in the same manner as Example No. 1.

### (Evaluation No. 2)

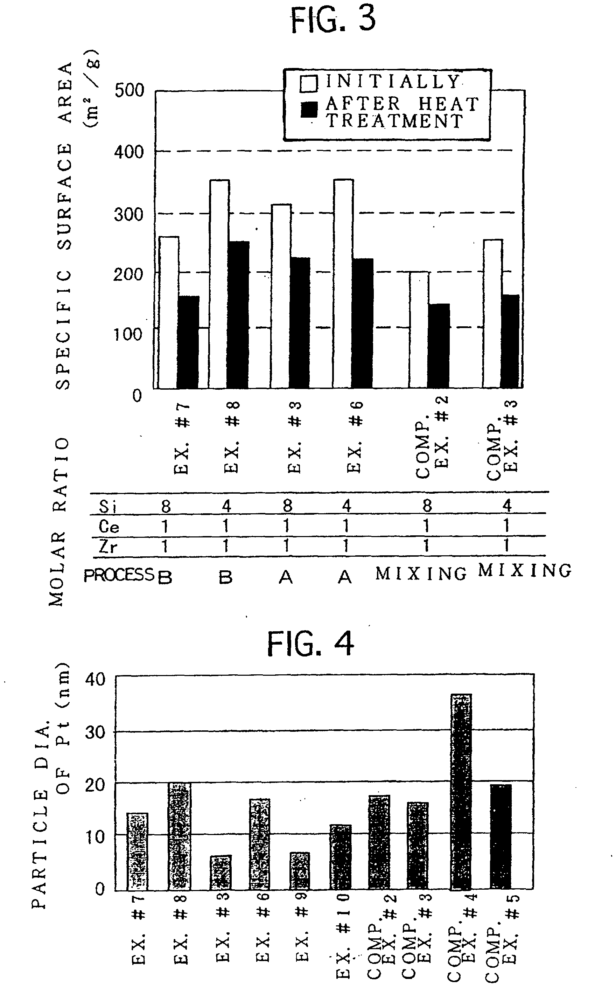

Table 2 below summarizes the arrangements of the above-described catalysts altogether. Moreover, the oxide composite supports employed in the catalysts of Example Nos. 3, Example Nos. 6 through 8, and the oxide mixture supports employed in the catalysts of Comparative Example Nos. 2 and 3 were subjected to a heat treatment. The heat treatment was carried out in air at 900 °C for 3 hours. The specific surface areas of the supports were measured before and after the heat treatment. Fig. 3 illustrates the results of the measurements.

The catalysts of Example Nos. 6 through 10, and the catalysts of Comparative Example Nos. 3 through 5 were subjected to the same durability test as set forth in Evaluation No. 1. After the durability test, the respective catalysts were examined for the particle diameter of the Pt by using an electron microscope. The results of the measurements are illustrated in Fig. 4 along with the results on the catalysts of Example No. 3 and Comparative Example No. 2.

It is understood from Fig. 3 that the catalysts of Example Nos. 7, 8, 3 and 6 exhibited larger specific surface areas than the catalysts of Comparative Example Nos. 2 and 3 initially and after the durability test. The advantage was apparently effected by compositing the OSM. Moreover, it is seen from Fig. 3 that the supports, produced by the Production Process "A", exhibited larger specific surface areas than the supports, produced by the Production Process "B", did.

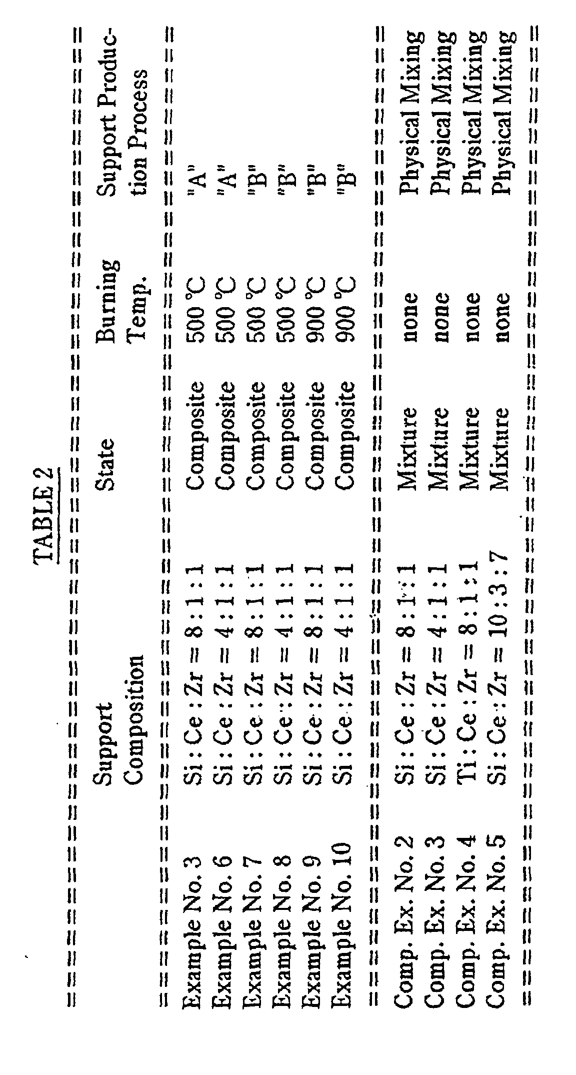

By comparing the results on Example Nos. 3 and 7 illustrated in Fig. 4 with the result on Comparative Example No. 2, and by comparing the results on Example Nos. 6 and 8 with the result on Comparative Example No. 3, the granular growth of the Pt was suppressed in the catalysts according to the present invention during the durability test. Moreover, the granular growth of the Pt was suppressed more in Example Nos. 9 and 10 than in Example Nos. 7 and 8. Namely, when the oxide composite supports were further burned at a temperature of 900 °C, the Pt was further inhibited from growing granularly. It is believed that this advantage is effected because parts of Si, Ce and Zr are solved with each other to stabilize the OSM.

In addition, by comparing the result on Example No. 3 with the result on Example No. 7, and by comparing the result on Example No. 6 and the result on Example No. 8, it is understood that the production process "A" is more preferable than the production process "B" in the preparation of the composite oxide support. Note the following distinction between the production process "A" and the production process "B". In the production process "A", the metallic alkoxide, working as the support source, and the metallic salts, working as the OSM source are hydrolyzed in the same system, and the hydroxides are formed by adding the aqueous ammonium. In the production process "B", the hydroxides of the metallic salts, working as the OSM source, are precipitated on the solid metallic oxide.

Hence, the catalysts of Example No. 3, Example No. 7 and Comparative Example No. 2 were examined for the initial NOₓ conversion and the NOₓ conversion after the durability test in the same manner as Evaluation No. 1. Table 3 below sets forth the results of the examination.

**TABLE 3**

| | State | Support Production Process | NOₓ Conversion (%) | |
|---|---|---|---|---|
| | | | Initial | A.D.T.* |
| Example No. 3 | Composite | Process "A" | 65 | 55 |
| Example No. 7 | Composite | Process "B" | 55 | 45 |
| Comp. Ex. No. 2 | Mixture | Physical Mixing | 45 | 40 |

| | | | | |
|---|---|---|---|---|
| * Note: "A. D. T." stands for "After Durability Test". | | | | |

It is evident from Table 3 that, considering the NOₓ purifying performance as well, the production process "A" is more preferable than the production process "B".

### Example No. 11 (not according to the invention)

Except that Fe(NO₃)₃ • 9H₂O was used instead of Ce(NO₃)₃ • 6H₂O and ZrO(NO₃)₂ • 2H₂O, an oxide composite support, which included metals in a molar composition ratio of Si : Fe = 80 : 20, was prepared in the same manner as Example No. 7. Then, this oxide composite support was used to complete a catalyst of Example No. 11. Namely, Pt was loaded on and mordenite was mixed with the oxide composite support in the same manner as Example No. 1.

### Example No. 12

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 80 : 19 : 1, was prepared in the same manner as Example No. 7. Then, this oxide composite support was used to complete a catalyst of Example No. 12. Namely, Pt was loaded on and mordenite was mixed with the oxide composite support in the same manner as Example No. 1.

### Example No. 13

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 80 : 18 : 2, was prepared in the same manner as Example No. 7. Then, this oxide composite support was used to complete a catalyst of Example No. 13. Namely, Pt was loaded on and mordenite was mixed with the oxide composite support in the same manner as Example No. 1.

### Example No. 14

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 80 : 16 : 4, was prepared in the same manner as Example No. 7. Then, this oxide composite support was used to complete a catalyst of Example No. 14. Namely, Pt was loaded on and mordenite was mixed with the oxide composite support in the same manner as Example No. 1.

### Example No. 15

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 80 : 14 : 6, was prepared in the same manner as Example No. 7. Then, this oxide composite support was used to complete a catalyst of Example No. 15. Namely, Pt was loaded on and mordenite was mixed with the oxide composite support in the same manner as Example No. 1.

### Example No. 16

Except that Fe(NO₃)₃ · 9H₂O and TiOSO₄ were used instead of Ce(NO₃)₃ · 6H₂O and ZrO(NO₃)₂ · 2H₂O, an oxide composite support, which included metals in a molar composition ratio of Si : Fe : Ti = 80 : 10 : 10, was prepared in the same manner as Example No. 7. Then, this oxide composite support was used to complete a catalyst of Example No. 16. Namely, Pt was loaded on and mordenite was mixed with the oxide composite support in the same manner as Example No. 1.

### (Evaluation No. 3)

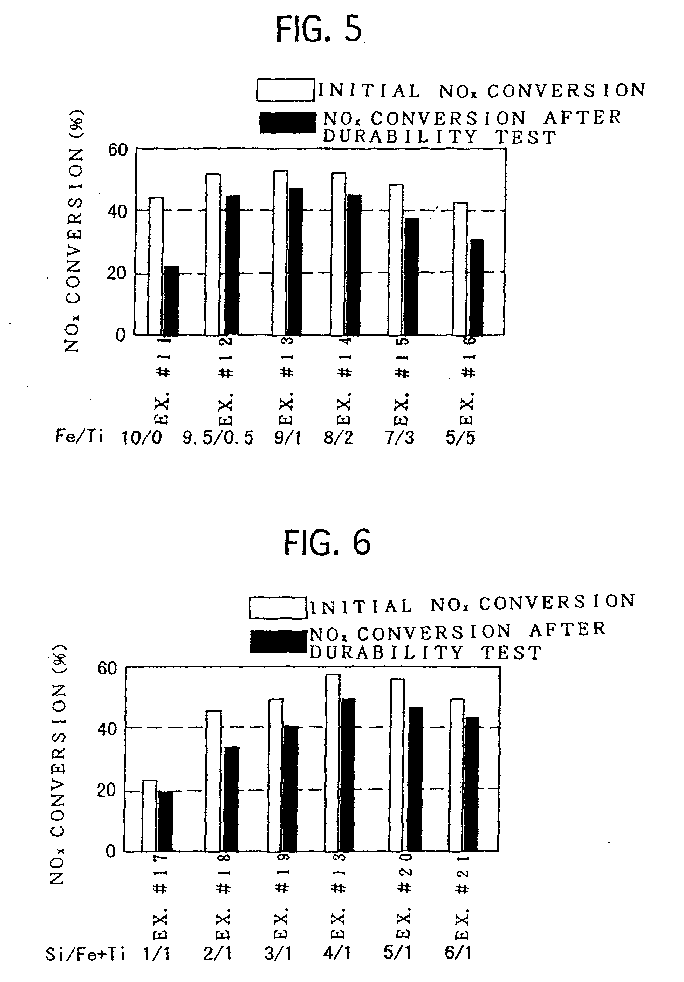

The catalysts of Example Nos. 11 through 16 were examined for the initial NOₓ conversion and the NOₓ conversion after the durability test in the same manner as Evaluation No. 1. Fig. 5 illustrates the results of the examination on the respective catalysts.

It is evident from Fig. 5 that, when the Si-Fe-Ti-based oxide composite supports were used, the catalysts exhibited especially good NOₓ purifying performance if the supports included Fe and Ti in a molar ratio of at around Fe : Ti = 9 : 1.

Then, under the condition that the Fe-to-Ti molar ratio was fixed at Fe : Ti = 9 : 1 in Si-Fe-Ti-based oxide composite supports, an optimum molar ratio of Si with respect to Fe + Ti was investigated for Si-Fe-Ti-based oxide composite supports.

### Example No. 17

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 50 : 45 : 5, was prepared in the same manner as Example No. 7. Then, this oxide composite support was used to complete a catalyst of Example No. 17. Namely, Pt was loaded on and mordenite was mixed with the oxide composite support in the same manner as Example No. 1.

### Example No. 18

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 40 : 18 : 2, was prepared in the same manner as Example No. 7. Then, this oxide composite support was used to complete a catalyst of Example No. 18. Namely, Pt was loaded on and mordenite was mixed with the oxide composite support in the same manner as Example No. 1.

### Example No. 19

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 60 : 18 : 2, was prepared in the same manner as Example No. 7. Then, this oxide composite support was used to complete a catalyst of Example No. 19. Namely, Pt was loaded on and mordenite was mixed with the oxide composite support in the same manner as Example No. 1.

### Example No. 20

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 100 : 18 : 2, was prepared in the same manner as Example No. 7. Then, this oxide composite support was used to complete a catalyst of Example No. 20. Namely, Pt was loaded on and mordenite was mixed with the oxide composite support in the same manner as Example No. 1.

### Example No. 21

Except that Fe(NO₃)₃ • 9H₂O and TiOSO₄ were used instead of Ce(NO₃)₃ • 6H₂O and ZrO(NO₃)₂ • 2H₂O, an oxide composite support, which included metals in a molar composition ratio of Si : Fe : Ti = 120 : 18 : 2, was prepared in the same manner as Example No. 7. Then, this oxide composite support was used to complete a catalyst of Example No. 21. Namely, Pt was loaded on and mordenite was mixed with the oxide composite support in the same manner as Example No. 1.

### (Evaluation No. 4)

The catalysts of Example Nos. 17 through 21 were examined for the initial NOₓ conversion and the NOₓ conversion after the durability test in the same manner as Evaluation No. 1. Fig. 6 illustrates the results of the examination on the respective catalysts along with those on the catalyst of Example No. 13.

It is evident from Fig. 6 that, when the Si-Fe-Ti-based oxide composite supports, in which the Fe-to-Ti ratio was fixed at Fe : Ti = 9 : 1, were used, the catalysts exhibited especially good NOₓ purifying performance if the supports included Si, Fe and Ti in a molar ratio of at around Si : Fe : Ti = 80 : 18 : 2.

## Claims

1. A catalyst for purifying an exhaust gas comprising a support composed of a porous oxide; a Fe-Ti composite oxide; and a noble metal: wherein
said support and said Fe-Ti composite oxide are composited at an approximately atomic level to constitute a composite oxide support; and said noble metal is loaded on the oxide composite support.

2. The catalyst according to Claim 1, wherein said support is at least one member selected from the group consisting of alumina, silica, titania, zirconia, magnesia, silica-alumina and zeolite.

3. The catalyst according to Claim 2, wherein said zeolite is at least one member selected from the group consisting of mordenite, USY, ZSM-5, ferrierite and zeolite β.

4. The catalyst according to Claim 1 further comprising a hydrocarbon adsorbing material.

5. The catalyst according to Clam 4, wherein said hydrocarbon adsorbing material is zeolite, and the zeolite is included in an amount of from 30 to 90% with respect to the total amount of the support, the Fe-Ti composite oxide and the zeolite.

6. The catalyst according to Claim 1, wherein the number of Fe moles in said Fe-Ti composite oxide falls in the range of from 50 to 98 molar % with respect to the total number of Fe moles and Ti moles.

7. The catalyst according to Claim 1, wherein the amount of said Fe-Ti composite oxide occupy in the range of from 10 to 50% by weight with respect to the total amount of said support and said Fe-Ti composite oxide.

8. The catalyst according to Claim 1, wherein said noble metal is at least one member selected from the group consisting of platinum, palladium, rhodium, iridium, silver and indium.

9. The catalyst according to Claim 1, wherein the loading amount of said noble metal falls in the range of from 0.4 to 2.4% by weight with respect to the whole catalyst.

10. A process for producing a catalyst for purifying an exhaust gas, the process comprising the steps of
preparing a solution by dissolving an alkoxide of at least one metal selected from the group consisting of Al, Ti, Si and Zr, and metallic salts or alkoxides of Fe and Ti into an alcohol;
adding water to the solution to hydrolyze the alkoxide, and simultaneously therewith or thereafter alkalifying the solution to form a precipitate;
burning the precipitate to make an oxide composite support, and thereafter loading a noble metal on the oxide composite support.

11. The process according to Claim 10, wherein, in said adding step, an alkaline substance is added to the solution together with the water.

12. The process according to Claim 11, wherein the alkaline substance and the water are added to the solution as an aqueous solution whose pH falls in the range of from 8 to 9.

13. The process according to Claim 11, wherein the alkaline substance disappears in the burning step.

## Patentansprüche

1. Katalysator zur Reinigung eines Abgases, der einen aus einem porösen Oxid bestehenden Träger, ein Fe-Ti-Mischoxid und ein Edelmetall umfaßt, wobei
der Träger und das Fe-Ti-Mischoxid auf einem nahezu atomaren Niveau vermischt sind, um einen Mischoxidträger zu bilden; und das Edelmetall auf den Mischoxidträger geladen ist.

2. Katalysator nach Anspruch 1, wobei der Träger mindestens ein Mitglied ist, das aus der aus Aluminiumoxid, Siliciumdioxid, Titandioxid, Zirconiumdioxid, Magnesiumoxid, Siliciumdioxid-Aluminiumoxid und Zeolith bestehenden Gruppe ausgewählt ist.

3. Katalysator nach Anspruch 2, wobei das Zeolith mindestens ein Mitglied ist, das aus der aus Mordenit, USY, ZSM-5, Ferrierit und Zeolith-β bestehenden Gruppe ausgewählt ist.

4. Katalysator nach Anspruch 1, der ferner ein Kohlenwasserstoff-adsorbierendes Material umfaßt.

5. Katalysator nach Anspruch 4, wobei das Kohlenwasserstoff-adsorbierende Material Zeolith ist und das Zeolith in einer Menge von 30 bis 90% bezogen auf die Gesamtmenge des Trägers, des Fe-Ti-Mischoxids und des Zeoliths enthalten ist.

6. Katalysator nach Anspruch 1, wobei die Anzahl an Fe-Molen in dem Fe-Ti-Mischoxid in den Bereich von 50 bis 98 Mol-%, bezogen auf die Gesamtzahl an Fe-Molen und Ti-Molen, fällt.

7. Katalysator nach Anspruch 1, wobei die Menge des Fe-Ti-Mischoxids im Bereich von 10 bis 50 Gew.-%, bezogen auf die Gesamtmenge des Trägers und des Fe-Ti-Mischoxids, liegt.

8. Katalysator nach Anspruch 1, wobei das Edelmetall mindestens ein Mitglied ist, das aus der aus Platin, Palladium, Rhodium, Iridium, Silber und Indium bestehenden Gruppe ausgewählt ist.

9. Katalysator nach Anspruch 1, wobei die Beladungsmenge des Edelmetalls in den Bereich von 0,4 bis 2,4 Gew.-%, bezogen auf den gesamten Katalysator, fällt.

10. Verfahren zur Herstellung eines Katalysators zur Reinigung eines Abgases, wobei das Verfahren die folgenden Schritte umfaßt:
Herstellen einer Lösung durch Auflösen eines Alkoxides von mindestens einem Metall, das aus der aus Al, Ti, Si und Zr bestehenden Gruppe ausgewählt ist, und Metallsalzen oder Alkoxiden von Fe und Ti in einem Alkohol;
Zugeben von Wasser zu der Lösung, um das Alkoxid zu hydrolysieren, und gleichzeitig damit oder danach Alkalisch-Machen der Lösung, um einen Niederschlag zu bilden;
Brennen des Niederschlages, um einen Mischoxidträger herzustellen, und danach Laden eines Edelmetalls auf den Mischoxidträger.

11. Verfahren nach Anspruch 10, wobei in dem Zugabeschritt eine alkalische Substanz zusammen mit dem Wasser zu der Lösung gegeben wird.

12. Verfahren nach Anspruch 11, wobei die alkalische Substanz und das Wasser als eine wäßrige Lösung, deren pH in den Bereich von 8 bis 9 fällt, zu der Lösung gegeben werden.

13. Verfahren nach Anspruch 11, wobei die alkalische Substanz in dem Schritt des Brennens verschwindet.

## Revendications

1. Catalyseur pour purifier un gaz d'échappement comprenant un support composé d'un oxyde poreux ; un oxyde mixte de Fe-Ti ; et un métal noble : dans lequel
ledit support et ledit oxyde mixte de Fe-Ti sont combinés à un niveau approximativement atomique afin de constituer un support en oxyde mixte ; et ledit métal noble est chargé sur le support en oxyde mixte.

2. Catalyseur selon la revendication 1, dans lequel ledit support est au moins un membre choisi parmi le groupe constitué d'alumine, de silice, d'oxyde de titane, de zircone, de magnésie, de silice-alumine et de zéolithe.

3. Catalyseur selon la revendication 2, dans lequel ladite zéolithe est au moins un membre choisi parmi le groupe constitué de mordénite, d'USY, de ZSM-5, de ferriérite et de zéolithe β.

4. Catalyseur selon la revendication 1 comprenant en outre un matériau adsorbant d'hydrocarbures.

5. Catalyseur selon la revendication 4, dans lequel ledit matériau adsorbant d'hydrocarbures est une zéolithe, et la zéolithe est incluse dans une quantité de 30 à 90 % par rapport à la quantité totale du support, de l'oxyde mixte de Fe-Ti et de la zéolithe.

6. Catalyseur selon la revendication 1, dans lequel le nombre de moles de Fe dans ledit oxyde mixte de Fe-Ti se situe dans la gamme de 50 à 98 % molaire par rapport au nombre total de moles de Fe et de moles de Ti.

7. Catalyseur selon la revendication 1, dans lequel la quantité dudit oxyde mixte de Fe-Ti occupe une gamme se situant de 10 à 50 % en poids par rapport à la quantité totale dudit support et dudit oxyde mixte de Fe-Ti.

8. Catalyseur selon la revendication 1, dans lequel le métal noble est au moins un membre choisi parmi le groupe constitué du platine, du palladium, du rhodium, de l'iridium, de l'argent et de l'indium.

9. Catalyseur selon la revendication 1, dans lequel la quantité chargée dudit métal noble se situe dans la gamme de 0,4 à 2,4 % an poids par rapport à la totalité du catalyseur.

10. Procédé afin de produire un catalyseur pour purifier un gaz d'échappement, le procédé comprend les étapes
de préparer une solution en dissolvant un alkylate d'au moins un métal choisi parmi un groupe constitué de l'Al, du Ti, du Si et du Zr, et des sels métalliques ou des alkylates de Fe et de Ti dans un alcool ;
d'ajouter de l'eau à la solution afin d'hydrolyser l'alkylate, et simultanément avec cela ou par la suite d'alcaliniser la solution afin de former un précipité ;
de brûler le précipité afin de faire un support en oxyde mixte, et par la suite de charger le métal noble sur le support en oxyde mixte.

11. Procédé selon la revendication 10, dans lequel, dans l'étape d'addition, une substance alcaline est ajoutée à la solution en même temps que l'eau.

12. Procédé selon la revendication 11, dans lequel la substance alcaline et l'eau sont ajoutées à la solution sous la forme d'une solution aqueuse dont le pH se situe dans une gamme de 8 à 9.

13. Procédé selon la revendication 11, dans lequel la substance alcaline disparaît dans l'étape de brûlage.
